(19) Europäisches Patentamt
European Patent Office
Office européen des brevets

(11) **EP 2 802 768 B1**

(12) **FASCICULE DE BREVET EUROPEEN**

(45) Date de publication et mention de la délivrance du brevet:
**24.10.2018 Bulletin 2018/43**

(21) Numéro de dépôt: **13706577.7**

(22) Date de dépôt: **10.01.2013**

(51) Int Cl.:
*F03B 3/12* *(2006.01)*    *F03B 13/18* *(2006.01)*
*F03B 13/22* *(2006.01)*    *F03B 13/26* *(2006.01)*
*F03B 17/06* *(2006.01)*

(86) Numéro de dépôt international:
**PCT/FR2013/000012**

(87) Numéro de publication internationale:
**WO 2013/104847 (18.07.2013 Gazette 2013/29)**

(54) **PALE D'HYDROLIENNE ET HYDROLIENNE COMPRENANT AU MOINS UNE TELLE PALE.**

WASSERTURBINENSCHAUFEL UND WASSERTURBINE MIT MINDESTENS EINER SOLCHEN SCHAUFEL

WATER TURBINE BLADE AND WATER TURBINE COMPRISING AT LEAST ONE SUCH BLADE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.01.2012 FR 1200107**

(43) Date de publication de la demande:
**19.11.2014 Bulletin 2014/47**

(73) Titulaire: **Sabella**
**29000 Quimper (FR)**

(72) Inventeurs:
• **DAVIAU, Jean-François**
  **29710 Plogastel Saint Germain (FR)**
• **GUERRIER, Alain**
  **56680 Plouhinec (FR)**

(74) Mandataire: **Ipside**
  **4, rue de Kerogan**
  **29337 Quimper Cedex (FR)**

(56) Documents cités:
**EP-A1- 2 112 370      EP-A2- 0 082 378**
**US-A1- 2008 138 206**

EP 2 802 768 B1

**Description**

**Domaine technique et état de l'art**

La présente invention se rapporte au domaine des hydroliennes destinées à exploiter l'énergie des courants marins. Plus particulièrement la présente invention concerne des pales d'hydrolienne.

Classiquement, les hydroliennes sont des machines sous-marines qui utilisent les courants de marée. La technologie d'hydrolienne est totalement immergée et repose sur le fond marin ou estuarien.

Généralement, les hydroliennes comprennent des pales reliées par une ceinture circulaire liant les extrémités de pale. Le fonctionnement d'une hydrolienne dans un courant de marée nécessite une optimisation de la pale dans les deux directions du courant d'eau. Le corps des pales d'hydrolienne est donc symétrique. Il convient d'interpréter le terme symétrique par le fait d'avoir un bord d'attaque et un bord de fuite de même forme.

Le document EP0082378 décrit une pale d'éolienne comprenant un corps de pale. Le corps de pale contient un bord d'attaque, un bord de fuite, un intrados défini par un premier flanc entre le bord d'attaque et le bord de fuite et un extrados défini par un deuxième flanc entre le bord d'attaque et le bord de fuite. Le corps de pale comprend une ailette qui recouvre une partie de la deuxième extrémité du corps de pale.

Par exemple, le document EP 2 112 370 montre une hydrolienne avec des pales reliées par une ceinture. La ceinture permet d'améliorer l'efficacité hydrodynamique en guidant le flux du courant vers les pales d'hydrolienne. L'inconvénient de ce dispositif est d'avoir une augmentation des phénomènes néfastes due, par exemple, aux vagues au niveau de la connexion entre les extrémités des pales et de la ceinture. En effet, la ceinture augmente les phénomènes cycliques dus aux vagues en nuisant à la durée de vie et au bon fonctionnement de l'hydrolienne.

Le but de la présente invention est de pallier ces inconvénients et de proposer un dispositif permettant d'assurer une meilleure qualité de l'écoulement dans le secteur des bouts de pale afin d'assurer une meilleure contribution au couple hydrodynamique.

**Description de l'invention**

L'invention propose une pale d'hydrolienne comprenant un corps de pale d'hydrolienne, ledit corps de pale est symétrique et contient un bord d'attaque, un bord de fuite, un intrados défini par un premier flanc entre le bord d'attaque et le bord de fuite et un extrados défini par un deuxième flanc entre le bord d'attaque et le bord de fuite, ledit corps de pale comprend une première extrémité prévue pour être fixée à un moyeu d'hydrolienne, caractérisée en ce qu'elle comprend en outre une ailette qui recouvre au moins une partie de la deuxième extrémité du corps de pale selon la revendication 1.

Les ailettes limitent les remous de turbulence aux bouts de pale et améliorent l'efficacité hydrodynamique de l'hydrolienne. En effet, elles améliorent l'efficacité globale entre 1 et 2% dans la plage de fonctionnement comparée à des systèmes avec ceinture. Les ailettes optimisent donc les performances hydrodynamiques de l'hydrolienne.

De plus, les coûts de fabrication sont réduits car il y a moins d'éléments à assembler.

L'ailette peut recouvrir partiellement l'extrémité de la pale de sorte à réduire le poids de la pale.

Selon une variante de l'invention, l'intégralité de la deuxième extrémité du corps de pale est recouverte par l'ailette.

De cette façon, l'ailette correspond à l'intégralité de l'extrémité de la pale et il n'y a pas de discontinuité de l'écoulement.

Selon une autre variante de l'invention, l'ailette fait saillie sur le premier flanc de la pale et/ou sur le deuxième flanc du corps de pale.

De préférence, l'ailette est symétrique par rapport au plan horizontal.

Grâce a cette symétrie, on a la même efficacité dans les deux directions de rotation.

On entend par les expressions :

- « plan horizontal » défini selon le sens habituel dans le référentiel terrestre, le plan horizontal est sensiblement égal au plan longitudinal du corps de pale ;
- « plan vertical » défini selon la perpendiculaire au plan horizontal et la perpendiculaire à l'axe longitudinal de l'ailette ;
- « plan longitudinal » défini selon la perpendiculaire au plan horizontal et passant par l'axe longitudinal de l'ailette.

Egalement selon une variante de l'invention, l'ailette a une forme d'un ellipsoïde aplati dont le centre passe par l'axe longitudinal du corps de pale, ledit ellipsoïde possède une longueur selon l'axe longitudinal de l'ailette, une largeur et une épaisseur selon l'axe longitudinal du corps de pale.

La longueur, la largeur et l'épaisseur sont des paramètres strictement positifs correspondant aux longueurs des demi-axes de l'objet.

La forme d'un ellipsoïde permet d'éviter des tranchants et permet d'assurer l'efficacité hydrodynamique sans avoir des contraintes de fabrication de l'ailette avec le corps de pale.

Selon un mode de réalisation, la largeur de l'ailette est selon l'axe vertical de l'ailette. Le plan vertical et le plan longitudinal de l'ailette sont sécants selon l'axe vertical.

Selon un autre mode de réalisation, l'ailette selon le plan horizontal a une forme bombée vers l'extérieur du corps de pale.

De cette manière, la forme bombée de l'ailette permet de suivre l'écoulement local, comme un arc de cercle dont le centre est le rotor.

Selon une autre variante de l'invention, la longueur de l'ailette est un facteur de 0,1 à 0,3 fois la demi-longueur de corde du profil de la pale et en ce que l'axe longitudinal de l'ailette est porté par le plan horizontal du corps de pale.

Egalement, selon une variante de l'invention, la largeur de l'ailette est un facteur de 1,5 à 2,5 fois la demi-largeur du petit axe du profil de la pale.

Selon une autre variante de l'invention, l'épaisseur de l'ailette est un facteur de 0,1 à 0,8 fois la demi-largeur du petit axe du profil de la pale.

Ces dimensions ont été choisies comme compromis entre l'efficacité hydrodynamique, la résistance de la structure et les contraintes de production.

Selon une variante de l'invention, l'hydrolienne est remarquable en ce qu'elle comprend au moins une pale d'hydrolienne.

## Brève description des figures

D'autres caractéristiques et avantages de l'invention apparaîtront à la lumière de la description qui suit, réalisée sur la base des dessins annexés. Ces exemples sont donnés à titre non limitatif. La description est à lire en relation avec les dessins annexés dans lesquels :

- la figure 1 représente une vue de face d'une illustration d'hydrolienne comprenant un rotor des pales d'hydrolienne selon l'invention,
- la figure 2 représente une vue en perspective d'un corps de pale,
- la figure 3 représente une vue radiale d'une ailette,
- la figure 4 représente un grossissement d'une vue de face de l'extrémité d'un corps de pale.

## Description de modes de réalisation de l'invention

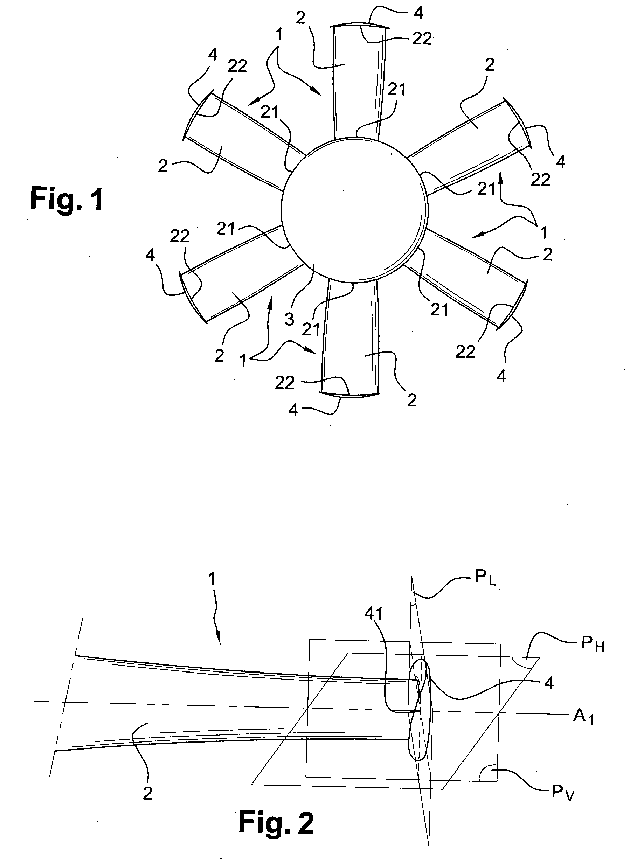

La figure 1 représente une hydrolienne comprenant une pale d'hydrolienne 1 comprenant un corps de pale 2 d'hydrolienne.

Le corps de pale 2 comprend une première extrémité 21 prévue pour être fixée à un moyeu 3 d'hydrolienne. Ce moyeu 3 correspond au rotor de l'hydrolienne. Dans cet exemple, la longueur du rotor est de 10 mètres et possède un rayon de 2 mètres. Le corps de pale 2 comprend également une ailette 4 positionnée sur au moins une partie de la deuxième extrémité 22 du corps de pale 2. L'ailette 4 de la figure 1 recouvre intégralement la deuxième extrémité 22 du corps de pale 2.

La figure 2 représente le plan horizontal PH, le plan vertical PV et le plan longitudinal PL. Le centre 41 de l'ailette 4 est positionné sur l'axe longitudinal du corps de pale 2.

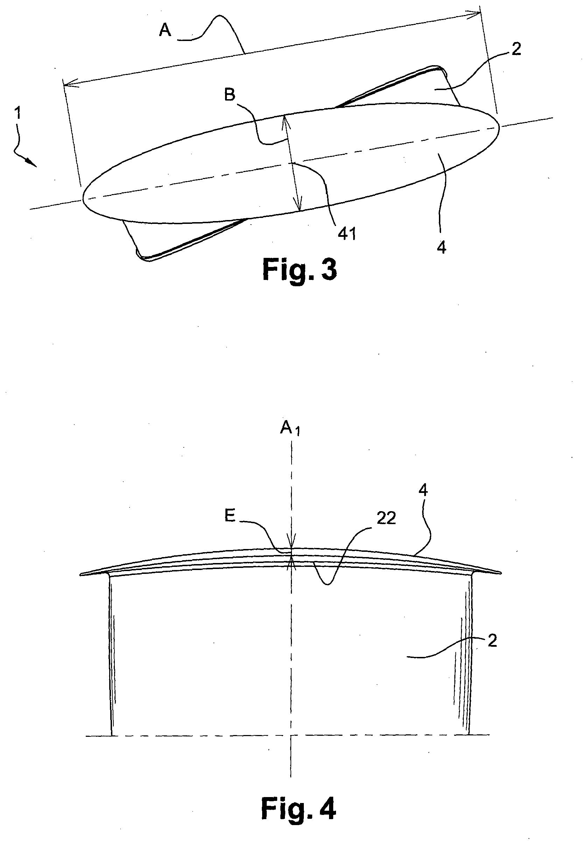

La figure 3 représente une vue radiale de l'ailette 4. L'ailette 4 a une forme d'un ellipsoïde aplati dont le centre passe par l'axe longitudinal A1 du corps de pale 2. L'ellipsoïde possède une longueur A selon l'axe longitudinal de l'ailette 4, une largeur B et une épaisseur E selon l'axe longitudinal du corps de pale 2. La largeur (B) est selon l'axe vertical de l'ailette 4, ledit axe vertical est l'axe sécant entre le plan vertical et le plan longitudinal de l'ailette 4.

Dans une variante de l'invention non représentée :

- l'ailette 4 peut avoir une forme d'une amande, d'une ellipse...

- le plan moyen du corps de pale est incliné par rapport au plan longitudinal de l'ailette 4 selon un angle dièdre de l'ordre de 20 à 90°, de préférence de 60 à 80°. Dans ce cas la longueur B est portée par le plan longitudinal de l'ailette 4. Le plan moyen du corps de pale 2 passe par l'axe longitudinal du corps de pale 2 et passe par au moins un point de la corde du profil du corps de pale 2. Par exemple, le plan moyen correspond sensiblement au plan horizontal du corps de pale 2.

Dans l'exemple représenté en figure 3, la longueur A de l'ailette 4 est de 1680 mm. La longueur de la corde du corps de pale 2 est de 1400 mm. De préférence, la longueur A est un facteur de 0,1 à 0,3 la longueur de corde du profil de la pale. La largeur B de l'ailette 4 est de 400 mm. La largeur du petit axe du profil est de 200 mm, correspondant également à l'épaisseur. De préférence, la largeur B est un facteur de 1,5 à 2,5 la largeur du petit axe du profil de la pale.

Dans ce cas, la partie faisant saillie sur le premier flanc du corps de pale 2 est symétrique à la partie faisant saillie sur le deuxième flanc du corps de pale 2.

La figure 4 représente un grossissement d'une vue de face de l'extrémité 22 du corps de pale 2. L'ailette 4 est de forme bombée vers l'extérieur du corps de pale 2. Dans cet exemple, l'épaisseur de l'ailette 4 est de 60 mm. De préférence, l'épaisseur E de l'ailette 4 est un facteur de 0,1 à 0,8 fois la demi-largeur du petit axe du profil de la pale, de préférence de 0,2 à 0,5.

On va voir l'intérêt de l'ajout de l'ailette 4 en comparant des performances d'une hydrolienne avec et sans ailette 4.

Les caractéristiques d'une turbine peuvent être exprimées sous forme de coefficients adimensionnels. La notion de vitesse de courant amont et de vitesse de rotation est incluse dans le paramètre d'avance J. Les caractéristiques de l'hydrolienne telles que le couple produit Q et la traînée T peuvent être exprimées sous forme de coefficients adimensionnels, respectivement coefficient de couple $k_Q$ et de poussée $K_T$

$$\text{Soit } K_T = \frac{T}{\rho\eta^2 D^4} \; ; \; K_Q = \frac{Q}{\rho\eta^2 D^5} \; ; \; J = \frac{V}{\eta D}$$

Et le rendement hydrodynamique est défini par :

$$\eta = \frac{puissance\ mécanique}{puissance\ hydraulique} = \frac{2\pi\eta Q}{P_{hydraulique} V S_{disquehélice}} = \frac{(K_Q\rho\eta^2 D^5)2\pi\eta}{\frac{1}{2}\rho V^3 (\pi\frac{D^2}{4})} = \frac{16 K_Q}{J^3}$$

Avec :

V : vitesse en amont (m/s)
$\eta$ : vitesse de rotation (rps : rotation par seconde)
D : diamètre de l'hydrolienne (D = 10 m)
$\rho$ : masse volumique du fluide ($\rho_{eau\ de\ mer}$ = $1025 Kg/m^3$), $\rho_{eau\ douce}$ = $1000 Kg/m^3$

Le tableau ci-dessous montre un comparatif de 5 point de mesure avec et sans ailette 4 pour une hydrolienne de même taille et dans les mêmes conditions.

| Avec ailette 4 | | | Sans ailette 4 | | | Ecarts avec et sans ailette 4 | |
|---|---|---|---|---|---|---|---|
| J | $K_Q$ | $\eta$ | J | $K_Q$ | $\eta$ | $K_Q$ | $\eta$ (en points) |
| 2.07 | 0.21 | 37.4% | 2.07 | 0.20 | 36.2% | 3.3% | 1.2 |
| 1.69 | 0.13 | 42.0% | 1.69 | 0.12 | 40.7% | 3.2% | 1.3 |
| 1.43 | 0.08 | 43.8% | 1.43 | 0.08 | 42.3% | 3.4% | 1.4 |
| 1.24 | 0.05 | 44.0% | 1.24 | 0.05 | 42.4% | 3.6% | 1.5 |
| 1.09 | 0.03 | 42.7% | 1.09 | 0.03 | 41.1% | 3.9% | 1.6 |

Ce tableau montre que la présence des ailettes 4 permet d'augmenter le rendement de 1.2 à 1.6 par rapport à une géométrie sans ailette 4. Ces résultats montrent l'intérêt des ailettes 4 pour réduire les tourbillons en bout de pale et améliorent les performances hydrodynamiques de l'hydrolienne.

Selon des variantes du mode de réalisation de l'invention détaillée ci-dessus, il peut également être prévu que :

- l'ailette 4 soit uniquement selon un premier flanc ou deuxième flanc du corps de pale 2,
- l'ailette 4 recouvre au moins une partie de l'autre extrémité du corps de pale 2.

Dans une autre variante, il peut être envisagé, sans sortir du cadre de l'invention, d'adapter les proportions, les formes de la pale d'hydrolienne 1 telles que celles décrites précédemment par de simples dispositions constructives qui apparaîtront directement et sans effort excessif à l'Homme du métier, de sorte à pouvoir l'utiliser dans le cadre d'une hydrolienne ; plus généralement, d'un dispositif destinée à exploiter l'énergie d'un fluide.

**Nomenclature**

1     pale d'hydrolienne
2     corps de pale
      21 première extrémité
      22 deuxième extrémité
3     moyeu
4     ailette
      41 centre de l'ailette

PH :     plan horizontal
PV :     plan vertical
PL :     plan longitudinal

**Revendications**

**1.** Pale d'hydrolienne (1) comprenant un corps de pale (2) d'hydrolienne, ledit corps de pale (2) est symétrique et contient un bord d'attaque, un bord de fuite, un intrados défini par un premier flanc entre le bord d'attaque et le bord de fuite et un extrados défini par un deuxième flanc entre le bord d'attaque et le bord de fuite, ledit corps de pale (2) comprend une première extrémité (21) prévue pour être fixée à un moyeu (3) d'hydrolienne, **caractérisée en ce qu'**elle comprend en outre une ailette (4) qui recouvre au moins une partie de la deuxième extrémité (22) du corps de pale (2), ladite ailette (4) est symétrique par rapport au plan horizontal et a une forme d'un ellipsoïde aplati dont le centre passe par l'axe longitudinal du corps de pale (2), ledit ellipsoïde possède une longueur (A) selon l'axe longitudinal de l'ailette (4), une largeur (B) et une épaisseur (E) selon l'axe longitudinal du corps de pale (2).

**2.** Pale d'hydrolienne (1) selon la revendication 1, **caractérisée en ce que** l'intégralité de la deuxième extrémité (22) du corps de pale (2) est recouverte par l'ailette (4).

**3.** Pale d'hydrolienne (1) selon la revendication 2, **caractérisée en ce que** l'ailette (4) fait saillie sur le premier flanc de la pale et/ou sur le deuxième flanc du corps de pale (2).

**4.** Pale d'hydrolienne (1) selon la revendication 1, **caractérisée en ce que** la largeur (B) de l'ailette (4) est selon l'axe vertical de l'ailette (4), le plan vertical et le plan longitudinal de l'ailette (4) sont sécants selon l'axe vertical.

**5.** Pale d'hydrolienne (1) selon la revendication 1, **caractérisée en ce que** l'ailette (4) selon le plan horizontal a une forme bombée vers l'extérieur du corps de pale (2).

**6.** Pale d'hydrolienne (1) selon la revendication 1, **caractérisée en ce que** la longueur (A) de l'ailette (4) est un facteur de 0,1 à 0,3 fois la demi-longueur de corde du profil de la pale et **en ce que** l'axe longitudinal de l'ailette (4) est porté par le plan horizontal du corps de pale (2).

**7.** Pale d'hydrolienne (1) selon l'une des revendications 1 ou 4, **caractérisée en ce que** la largeur (B) de l'ailette (4) est un facteur de 1,5 à 2,5 fois la demi-largeur du petit axe du profil de la pale.

**8.** Pale d'hydrolienne (1) selon l'une des revendications 1 ou 4, **caractérisée en ce que** l'épaisseur (E) de l'ailette (4) est un facteur de 0,1 à 0,8 fois la demi-largeur du petit axe du profil de la pale

**9.** Hydrolienne, **caractérisée en ce qu'**elle comprend au moins une pale d'hydrolienne (1) selon l'une des revendications précédentes.

**Patentansprüche**

1. Gezeitenturbinenschaufel (1), die einen Gezeitenturbinenschaufelkörper (2) umfasst, wobei der Schaufelkörper (2) symmetrisch ist und eine Anströmkante, eine Abströmkante, eine Laibung, die von einer ersten Flanke zwischen der Anströmkante und der Abströmkante definiert wird, und eine Wölbung enthält, die von einer zweiten Flanke zwischen der Anströmkante und der Abströmkante definiert wird, wobei der Schaufelkörper (2) ein erstes Ende (21) umfasst, das dafür vorgesehen ist, an einer Gezeitenturbinennabe (3) befestigt zu werden, **dadurch gekennzeichnet, dass** sie weiter einen Flügel (4) umfasst, der mindestens einen Teil des zweiten Endes (22) des Schaufelkörpers (2) bedeckt, wobei der Flügel (4) in Bezug auf die horizontale Ebene symmetrisch ist und eine Form eines abgeflachten Ellipsoids aufweist, dessen Zentrum durch die Längsachse des Schaufelkörpers (2) verläuft, das Ellipsoid eine Länge (A) entlang der Längsachse des Flügels (4), eine Breite (B) und eine Dicke (E) entlang der Längsachse des Schaufelkörpers (2) besitzt.

2. Gezeitenturbinenschaufel (1) nach Anspruch 1, **dadurch gekennzeichnet, dass** die Gesamtheit des zweiten Endes (22) des Schaufelkörpers (2) vom Flügel (4) bedeckt wird.

3. Gezeitenturbinenschaufel (1) nach Anspruch 2, **dadurch gekennzeichnet, dass** der Flügel (4) an der ersten Flanke der Schaufel und/oder an der zweiten Flanke des Schaufelkörpers (2) vorspringt.

4. Gezeitenturbinenschaufel (1) nach Anspruch 1, **dadurch gekennzeichnet, dass** sich die Breite (B) des Flügels (4) entlang der vertikalen Achse des Flügels (4) befindet, die vertikale Ebene und die Längsebene des Flügels (4) sich entlang der vertikalen Achse schneiden.

5. Gezeitenturbinenschaufel (1) nach Anspruch 1, **dadurch gekennzeichnet, dass** der Flügel (4) entlang der horizontalen Ebene eine zur Außenseite des Schaufelkörpers (2) hin bombierte Form aufweist.

6. Gezeitenturbinenschaufel (1) nach Anspruch 1, **dadurch gekennzeichnet, dass** die Länge (A) des Flügels (4) ein Faktor von 0,1 bis 0,3 mal die halbe Sehnenlänge des Profils der Schaufel ist, und dadurch, dass die Längsachse des Flügels (4) von der horizontalen Ebene des Schaufelkörpers (2) getragen wird.

7. Gezeitenturbinenschaufel (1) nach einem der Ansprüche 1 oder 4, **dadurch gekennzeichnet, dass** die Breite (B) des Flügels (4) ein Faktor von 1,5 bis 2,5 mal die halbe Breite der kurzen Achse des Profils der Schaufel ist.

8. Gezeitenturbinenschaufel (1) nach einem der Ansprüche 1 oder 4, **dadurch gekennzeichnet, dass** die Dicke (E) des Flügels (4) ein Faktor von 0,1 bis 0,8 mal die halbe Breite der kurzen Achse des Profils der Schaufel ist.

9. Gezeitenturbine, **dadurch gekennzeichnet, dass** sie mindestens eine Gezeitenturbinenschaufel (1) nach einem der vorstehenden Ansprüche umfasst.

**Claims**

1. Marine turbine blade (1) comprising a marine turbine blade body (2), said blade body (2) is symmetric and contains a leading edge, a trailing edge, an intrados defined by a first flank between the leading edge and the trailing edge, and an extrados defined by a second flank between the leading edge and the trailing edge, said blade body (2) comprises a first end (21) designed to be fixed to a marine turbine hub (3), **characterised in that** it also comprises a fin (4) that covers at least part of the second end (22) of the blade body (2), said fin (4) is symmetrical about the horizontal plane and is shaped like a flatted ellipsoid, the centre of which passes through the longitudinal axis of the blade body (2), said ellipsoid has a length (A) along the longitudinal axis of the fin (4), a width (B) and a thickness (E) along the longitudinal axis of the blade body (20).

2. Marine turbine blade (1) according to claim 1, **characterised in that** the entire second end (22) of the blade body (2) is covered by the fin (4).

3. Marine turbine blade (1) according to claim 2, **characterised in that** the fin (4) projects on the first flank of the blade and/or on the second flank of the blade body (2).

4. Marine turbine blade (1) according to claim 1, **characterised in that** the width (B) of the fin (4) lies along the vertical axis of the fin (4), the vertical plane and the longitudinal plane of the fin (4) intersect along the vertical axis.

5. Marine turbine blade (1) according to claim 1, **characterised in that** the fin (4) in the horizontal plane is curved towards the outside of the blade body (2).

6. Marine turbine blade (1) according to claim 1, **characterised in that** the length (A) of the fin (4) is a factor of 0.1 to 0.3 times the half-chord length of the blade profile and **in that** the longitudinal axis of the fin (4) is carried by the horizontal plane of the blade body (2).

7. Marine turbine blade (1) according to one of claims 1 or 4, **characterised in that** the width (B) of the fin (4) is a factor of 1.5 to 2.5 times the half-width of the minor axis of the blade profile.

8. Marine turbine blade (1) according to one of claims 1 or 4, **characterised in that** the thickness (E) of the fin (4) is a factor of 0.1 to 0.8 times the half-width of the minor axis of the blade profile.

9. Marine turbine, **characterised in that** it comprises at least one marine turbine blade (1) according to one of the above claims.

# Fig. 1

# Fig. 2

**Fig. 3**

**Fig. 4**

**EP 2 802 768 B1**

## RÉFÉRENCES CITÉES DANS LA DESCRIPTION

**Documents brevets cités dans la description**

- EP 0082378 A

- EP 2112370 A